# FASCICULE DE BREVET EUROPEEN

(11) **EP 1 591 500 B1**
(45) Date de publication et mention de la délivrance du brevet: **05.12.2007**
(21) Numéro de dépôt: 05370006.8
(22) Date de dépôt: 14.04.2005
(51) Int. Cl.: C09D 133/14

(54) **Vernis anti-graffiti**
GEGEN GRAFFITI LACK
ANTI-GRAFFITI VARNISH

(30) Priorité: 26.04.2004 FR 0404407
(43) Date de publication de la demande: 02.11.2005
(73) Titulaire: Soficor Mader, 62161 Maroeuil (FR)
(72) Inventeur: Molina, Antonio, 59320 Escobecques (FR); Le Guern, Jean, 21000 Dijon (FR)
(74) Mandataire: Hennion, Jean-Claude

(56) Documents cités:
- EP-A- 0 077 278
- EP-A- 1 164 149

## Description

Le phénomène du tag est apparu de façon sensible en France dans les années 80, quand les grandes villes et leurs moyens de transport en commun ont fait les frais des premiers graffitis.

Aujourd'hui, c'est un combat pratiquement quotidien que livrent propriétaires privés et pouvoirs publics pour protéger leur patrimoine. Le tag est vécu comme une atteinte à la vie privée et comme un facteur d'insécurité, là où il est présent. La SNCF considère que les tags et graffitis contribuent au sentiment d'insécurité chez les voyageurs et souligne qu'il y a davantage d'agressions dans les espaces dégradés que dans ceux qui sont préservés. Des fonds importants sont dépensés chaque année pour remédier à ces dégradations (5 millions d'euros par an par la SNCF).

Dans un premier temps, les solutions apportées furent de deux types :
- nettoyer et décaper le support en question, avec des résultats médiocres voire catastrophiques, en abîmant le plus souvent le support ;
- repeindre régulièrement ledit support.

Rapidement, une troisième solution, de prévention, s'impose : éliminer facilement le graffiti grâce à la mise en oeuvre sur le support d'un système anti-graffiti. Actuellement, il existe différentes solutions adaptées à plusieurs types de supports, en fonction de la nature de celui-ci, de la nature du revêtement ou de la peinture mise en oeuvre.

Les qualités indispensables des anti-graffiti sont :
- une bonne adhérence ;
- compatibilité avec les différents matériaux ;
- une meilleure perméabilité à la vapeur d'eau (afin d'assurer la respirabilité de certains matériaux, notamment la pierre) ;
- protection contre toutes sortes de graffiti : peinture en bombes, feutres, mixtures des tagueurs à base de colorants naturels...
- une bonne résistance aux UV.

Les systèmes anti-graffiti préventifs se repartissent en trois groupes :
- les non permanents, sous forme de films transparents ; au nettoyage des graffiti, ceux-ci et le film sont enlevés en même temps ;
- les semi-permanents, dont une sous-couche est permanente et une couche supérieure est sacrificielle ;
- les permanents : vernis ou peintures qui font obstacle à la migration des différents pigments présents dans les graffiti, dans le support.

Les matériaux pouvant servir de support aux graffitis peuvent être classés en deux catégories :
- des supports solides tels que la pierre, le béton, le crépi ou la terre cuite, qui sont poreux ; le revêtement anti-graffiti doit assurer leur aptitude à la respiration ;
- des supports solides à surface lisse et non-poreuse comme les métaux, les matériaux plastiques, les matériaux composites, le verre, qui peuvent être revêtus d'une protection anti-graffiti imperméable à l'air.

Parmi les différents systèmes anti-graffiti (vernis, peintures) utilisés pour ces derniers supports, certains, qui permettent l'application de graffiti, laissent à désirer, notamment en ce qui concerne la possibilité d'effacer rapidement et efficacement le graffiti.

D'autres systèmes connus sont formulés pour être totalement anti-adhérents quant au graffiti. Leur utilisation reste, cependant, très limitée, car le fait d'empêcher l'application de graffiti sur des objets privés ou publics de ce type peut conduire à des comportements anti-sociaux encore plus difficiles à prendre en charge.

Le problème que se propose de résoudre la présente invention consiste donc en l'obtention d'un revêtement anti-graffiti, pour support solide notamment métallique, peint ou non peint, ledit revêtement permettant, dans un premier temps, d'appliquer sur sa surface une couche dite de graffiti, et dans un deuxième temps, d'éliminer complètement et facilement ladite couche de graffiti à l'aide d'un produit nettoyant.

Selon un premier aspect, la présente invention a trait à un revêtement anti-graffiti pour support solide non-poreux à surface lisse, ledit revêtement étant obtenu par réticulation, notamment par réticulation sous rayonnement UV, d'une composition comprenant :
- au moins une résine sélectionnée parmi les uréthane acrylates et les uréthane acrylates hydroxylés ;
- au moins un monomère et/ou un solvant ;
- au moins un photoinitiateur,
- éventuellement un agent anti-UV,
la sélection des composants de la composition et les conditions de réticulation étant tels que ledit revêtement présente un réseau de réticulation compact et acquiert une classification « G1 » ou « G0 » selon la norme NF F 31-112.

Selon diverses réalisations, le revêtement présente les caractères suivants, le cas échéant combinés :
- le monomère utilisé joue également le rôle de solvant pour permettre une bonne application du vernis;
- les pourcentages en poids des composants de base de ladite composition sont : résine - de 35 à 80% ; monomère et/ou solvant - de 20 à 60% ; photoinitiateur - de 0,5 à 7%;
- présente une force d'adhésion inférieure à 200 nN ;
- pour le cas où ledit support solide présente des surfaces courbes, ladite composition comprend également de l'isocyanate, de sorte que la réticulation sous rayonnement UV puisse être complétée, dans les endroits dudit support peu ou non accessibles aux UV, par une réticulation chimique ;
- il consiste en une pellicule de vernis dont l'épaisseur est comprise entre 5 et 25 µm.

Selon un deuxième aspect, la présente invention se rapporte à un procédé de traitement anti-graffiti d'une surface lisse d'un objet solide non-poreux, caractérisé en ce qu'il comprend les étapes suivantes :
i) application de la composition du revêtement de l'invention sur un support solide ;
ii) exposition dudit support à un rayonnement UV ;
iii) application d'une couche de graffiti sur le revêtement ainsi formé ;
iv) élimination de la couche de graffiti à l'aide d'un produit nettoyant à base de solvant.

La présente invention sera mieux comprise à la lecture de la description qui va être faite en référence aux figures annexées, dans lesquelles :
- la fig. 1 montre les courbes de force d'adhésion des revêtements correspondant à la formule 91266 (fig. 1a) et à la formule PAT 0812901 (fig. 1b) respectivement ;
- la fig. 2 montre les courbes de force électrostatique des revêtements correspondant à la formule 91103 (fig. 2a) et à la formule PAT 0812901 (fig. 2b) respectivement.

Dans le cadre de travaux de recherche axés sur les phénomènes de réticulation, le Demandeur a effectué des observations, au microscope électronique, sur des pellicules obtenues par polymérisation sous rayonnement à la surface d'objets solides non-poreux à surface lisse, notamment métalliques, lesdites pellicules étant couvertes ensuite d'une couche de graffiti.

Par le terme « graffiti » on entend ici des inscriptions ou dessins tracés à la main (à l'aide de feutres) ou au moyen de bombes (sprays) sur des supports solides. Du point de vue chimique, les graffitis sont composés essentiellement de pigments, d'un liant et d'un solvant. Des liants utilisés fréquemment pour les sprays sont les résines acryliques, les résines « alkydes » et les résines de silicone.

Les observations au microscope électronique ont montré que le graffiti pouvait encore adhérer à la pellicule dès lors que la réticulation n'était pas parfaite. Ceci a conduit le Demandeur à associer l'effet anti-graffiti :
- d'une part, à la densité du réseau de réticulation, sachant qu'un réseau compact ne peut être obtenu que par une méthode de réticulation mettant en oeuvre un rayonnement UV ou un bombardement d'électrons (réticulation physique) ;
- et, d'autre part, aux propriétés mécaniques de la pellicule de vernis, telles que :
   o force d'adhésion ;
   o charges de surface.

Par propriété anti-graffiti d'un revêtement on entend ici la capacité dudit revêtement de permettre, dans un premier temps, d'appliquer sur sa surface une couche dite de graffiti, et, dans un deuxième temps, d'éliminer ladite couche de graffiti à l'aide d'un produit nettoyant.

Le Demandeur a ensuite testé 15 compositions de vernis, développées pour diverses applications, illustrées dans le tableau 1. Ces formulations ont été appliquées sur des surfaces solides lisses non-poreuses, notamment métalliques, peintes ou non peintes. La réticulation desdites formulations réalisée par rayonnement UV, selon les techniques connues par l'homme du métier, conduit à l'obtention de revêtements ou pellicules de vernis, qui ont été soumis à plusieurs séries de tests.

Dans une première série de tests, les propriétés anti-graffiti desdits revêtements ont été étudiées selon un protocole utilisé par la SNCF conformément à la norme NF F 31-112. Ce document décrit des procédures d'essais et des méthodes d'évaluation des résultats en laboratoire, permettant un classement, vis à vis des graffiti, des matériaux utilisés comme matériel roulant ferroviaire, et des produits d'élimination. C'est le comportement du couple « matériau/produit d'élimination » qui est évalué en terme d'agressivité et d'efficacité. A partir des produits d'élimination, reconnus non agressifs et efficaces, les matériaux testés

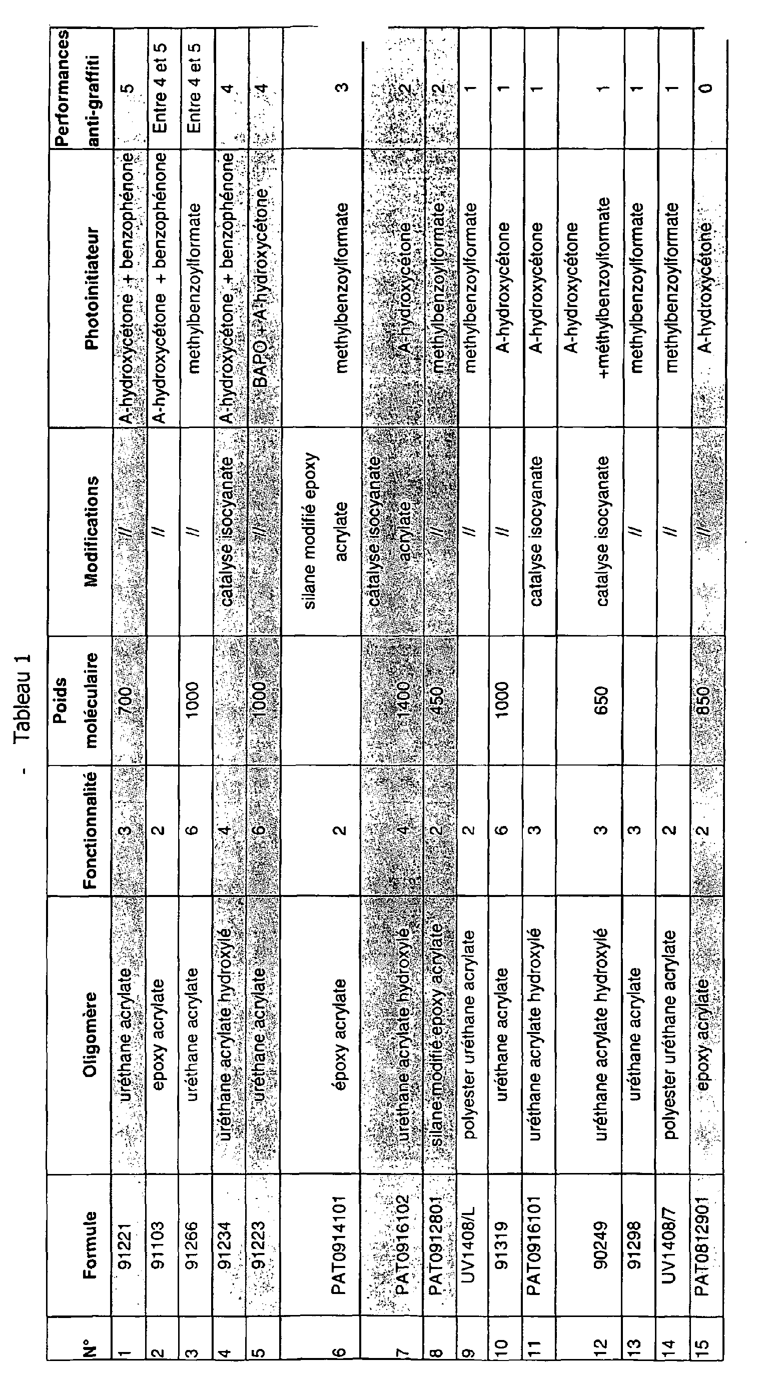

**Tableau 2**

| 310.7110.011 | A | B | C | D | E | F | G | H | I |
|---|---|---|---|---|---|---|---|---|---|
| Uréthane acrylate hexafonctionnel | 66 | 64,3 | 66 | 65 | 62,3 | // | // | // | // |
| Uréthane acrylate trifonctionnel | // | // | // | // | // | 76,9 | 75,3 | 73,8 | 70,8 |
| Hexanediol diacrylate | 28 | 27,3 | 28 | 27,5 | 26,4 | 15,4 | 15,1 | 14,8 | 14,1 |
| Méthyl benzoyl formate | 3 | 2,9 | 3 | 3 | 2,8 | // | // | // | // |
| Additif siliconé 1 | 0,5 | 0,5 | 0,5 | 0,5 | 0,5 | // | // | // | // |
| 1-hydroxycétone | // | // | // | // | // | 4,6 | 4,5 | 4,4 | 4,3 |
| Benzophénone | // | // | // | // | // | 2,8 | 2,8 | 2,7 | 2,5 |
| Additif siliconé 2 | // | // | // | // | // | 0,3 | 0,3 | 0,3 | 0,3 |
| Tinuvin 1130 | 1,5 | 3 | 1,5 | // | // | // | 1,3 | // | // |
| Tinuvin 292 | 1 | 2 | 1 | // | // | // | 0,7 | // | // |
| Tinuvin 400 | // | // | // | // | // | // | // | // | // |
| Sanduvor 3212 | // | // | // | 4 | 8 | // | // | 4 | 8 |

**Tableau 3**

| 310.7110.011 | A | B | C | D | E | F | G | H | I |
|---|---|---|---|---|---|---|---|---|---|
| Encre rouge (nettoyage après 30 min) | OK | OK | OK | OK | OK | OK | OK | OK | OK |
| 2e marquage sur surface nettoyée (nettoyage après 15 min) | OK | OK | OK | OK | OK | OK | OK | OK | OK |
| nettoyage après 48 heures | OK | OK | OK | OK | OK | OK | OK | OK | OK |
| marquage après 14 jours (nettoyage après 1 heure) | Tache très légère | Tache | Tache très légère | Tache | Attaque du vernis | OK | OK | Tache très légère | Attaque du vernis |
| QUV 48 cycles sur base solvant | delta Br-2 deltaE 0,23 Gt0 | delta Br 0 deltaE 0,52 Gt0 | delta Br 0 deltaE 0,47 Gt0 | delta Br 0 deltaE 0,60 Gt0 | delta Br 0 deltaE 0,96 Gt1 | delta Br-6 deltaE 0,62 craquelures Gt1 | delta Br-3 deltaE 0,61 craquelures Gt0 | delta Br-2 deltaE 0,48 craquelures Gt2 | delta Br-1 deltaE 0,28 Gt0 |
| QUV 48 cycles sur base hydro | delta Br 0 deltaE 0,30 Gt0 | delta Br-2 deltaE 0,21 Gt4 | delta Br 0 deltaE 0,21 Gt0 | delta Br-4 deltaE 0,34 Gt0 | delta Br-1 deltaE 0,82 Gt1 | delta Br-6 deltaE 1,22 craquelures Gt0 | delta Br-4 deltaE 1,33 craquelures Gt2 | delta Br-3 deltaE 0,92 craquelures Gt0 | delta Br 0 deltaE 0,45 deltaE 0,45 Gt2 |
| QUV 72 cycles sur base solvant | delta Br -2 deltaE 0,32 craquelures | delta Br 0 deltaE 06 | delta Br 0 deltaE 0,58 | delta Br -4 deltaE 0,51 craquelures | delta Br 0 deltaE 0,99 | delta Br -42 deltaE 0,93 craquelures | delta Br -4 deltaE 0,94 craquelures | delta Br -3 deltaE 0,67 craquelures | delta Br-1 deltaE 0,33 |
| QUV 72 cycles sur base hydro | delta Br 0 deltaE 1,05 craquelures | delta Br -2 deltaE 0,76 | delta Br -2 deltaE 0,36 | delta Br -4 deltaE 0,63 craquelures | delta Br +1 deltaE 0,96 craquelures | delta Br -10 deltaE 1,52 craquelures | delta Br -34 deltaE 2,00 craquelures | delta Br -56 deltaE 1,21 craquelures | delta Br 0 deltaE 1,24 craquelures |
| QUV 104 cycles sur base solvant | delta Br -2 deltaE 0,29 craquelures | delta Br 0 deltaE 0,63 | delta Br 0 deltaE 0,72 | delta Br -4 deltaE 0,62 craquelures | delta Br 0 deltaE 0,96 craquelures | delta Br -55 deltaE 0,99 | delta Br -5 deltaE 1,35 craquelures | delta Br -6 deltaE 0,94 craquelures | delta Br -2 deltaE 0,61 deltaE 0,61 |
| QUV 104 cycles sur base hydro | delta Br -4 deltaE 1,10 craquelures | delta Br -2 deltaE 0,86 | delta Br -3 deltaE 0,40 | delta Br -7 deltaE 0,78 craquelures | delta Br -4 deltaE 0,88 craquelures | delta Br -13 deltaE 1,09 craquelures | Décollement du film | delta Br -56 deltaE 1,28 craquelures | delta Br -4 deltaE 1,35 craquelures |

sont classés selon un classement « G », qui prend en compte l'aspect hygiène et sécurité des produits d'élimination. Sur cette base, le principe de classement est le suivant :
- G 0 : matériau « nettoyable » à l'eau ou à sec ;
- G 1 : matériau « nettoyable » avec un produit d'élimination étiqueté sans symbole de danger ;
- G 2 : matériau « nettoyable » avec un produit d'élimination étiqueté irritant « Xi » et/ou facilement inflammable « F » ;
- G 3 : matériau « nettoyable » avec un produit d'élimination étiqueté nocif « Xn » et/ou corrosif « C » ;
- G 4 : matériau « nettoyable » avec un produit d'élimination étiqueté toxique « T » ;
- N N : matériau « NON NETTOYABLE ».

Les essais de nettoyage ont été effectués dans un premier temps à l'aide d'un nettoyant classé Xi (SOCOSTRIP T4210), et l'efficacité a été évaluée visuellement sur une échelle de 0 à 5, que l'on peut relier à la norme NF F 31-112 de la manière suivante :

| Degré d'efficacité selon l'invention | Résultats selon NF F 31-112 |
|---|---|
| 5 | Bon |
| 4 | Passable |
| 3 | Passable |
| 2 | Mauvais |
| 1 | Mauvais |
| 0 | Mauvais |

Il a été constaté que :
- neuf formulations ne donnent pas un effet anti-graffiti notable (références 7 à 15, tableau 1- performances anti-graffiti allant de 0 à 2);
- trois autres formulations donnent des résultats moyens (références 4 à 6, tableau 1 - performances anti-graffiti 3 ou 4) ;
- trois formulations donnent des résultats exceptionnels, en termes de facilité de nettoyage des graffiti (références 1 à 3, tableau 1 - performances anti-graffiti de 5 ou situées entre 4 et 5).

Les essais de nettoyage ont été refaits pour les formulations de la dernière catégorie avec des nettoyants sans symbole de danger (Magnus 1302 et le dégraissant 220 US). Les performances trouvées sont quasiment identiques à celles rapportées plus haut, ce qui permet de classer ces matériaux G1 ou G0 selon la norme NF F 31-112.
Les formulations de la dernière catégorie se caractérisent notamment par une composition de type : résine de type oligomère + monomère + photoinitiateur, composition apte (une fois appliquée audit support) à former sous rayonnement UV un réseau de réticulation caractérisé par une densité élevée de réticulation (réseau de réticulation compact). Grâce à cette propriété, les pigments présents dans la couche de graffiti ne pénètrent pas ou fort peu dans ledit réseau de réticulation. Ceci rend possible l'élimination complète et facile de ladite couche de graffiti à l'aide d'un nettoyant usuel à base de solvant.

Il a été noté que pour ces trois dernières compositions, le monomère jouait également le rôle de solvant.

Par ailleurs, quand une bonne tenue anti-graffiti à l'extérieur est souhaitée, la composition du vernis comprend également un agent anti-UV. Dans ce cas, l'agent anti-UV doit être compatible avec le photoinitiateur utilisé, de façon à permettre, d'une part, la polymérisation rapide sous rayonnement UV, et, d'autre part, de garder une bonne tenue aux UV dans le temps.

Dans un mode de réalisation de l'invention, une réticulation mixte (physique - sous rayonnement UV, et chimique - à l'isocyanate) pourrait être envisagée, notamment pour couvrir avec le revêtement de l'invention des objets qui présentent des surfaces courbes, non accessibles en entier aux rayonnements UV. Dans ce cas, le vernis est catalysé par adjonction d'isocyanate avant application sur un support.

Par ailleurs, le demandeur a effectué une deuxième série de tests sur les pellicules de vernis de l'invention, consistant en l'étude de leurs propriétés mécaniques : force d'adhésion, charges de surface, énergie de surface.

### Force d'adhésion

La force d'adhésion de différents revêtements selon l'invention a été mesurée au moyen d'un microscope à force atomique (Dimension 3100 AFM, DI Digital Instruments, Veeco). Cette technique permet de mesurer les forces au niveau de la pointe de la sonde du microscope, suivant la distance entre ladite pointe et la surface du revêtement.

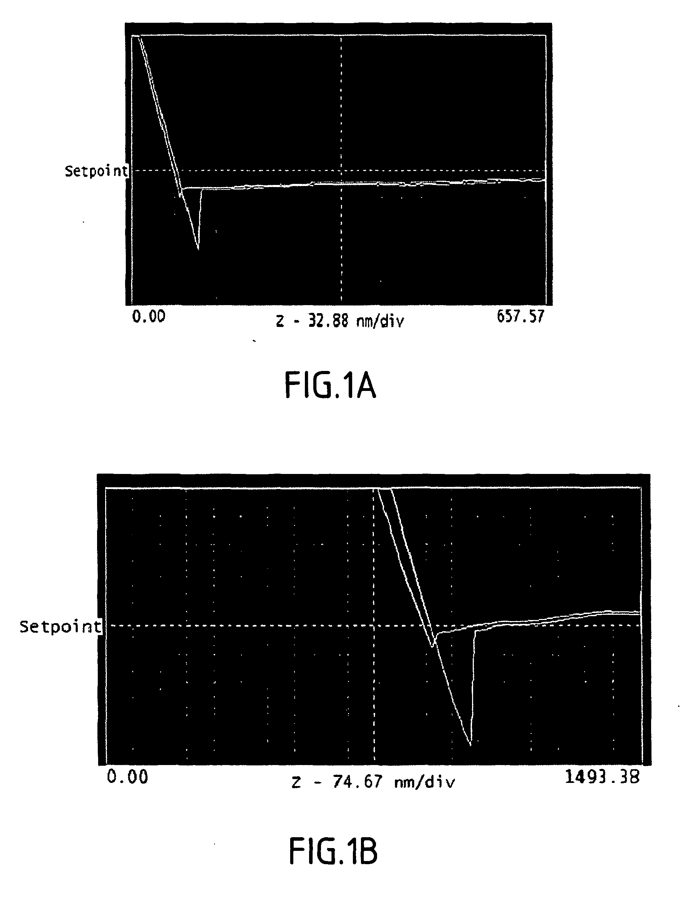

Les variations de déflection du levier sont enregistrées en fonction de la distance pointe - échantillon, la valeur de la force d'adhésion étant obtenue à partir de la constante de raideur du levier (44 N/m) (fig. 1). Une série de 30 courbes a été effectuée sur chaque échantillon. Les revêtements présentant de très bonnes qualités anti-graffiti (par exemple, celui qui correspond à la formulation n°. 3 du tableau 1) se caractérisent par une force d'adhésion faible, inférieure à 200 nN (fig. 1a). Les revêtements dont les performances anti-graffiti sont réduites voire nulles (par exemple, celui qui correspond à la formulation n° 15 du tableau 1) présentent une force d'adhésion importante allant de 400 à plus de 800 nN (fig. 1b).

### Charges de surface

Les charges de surface (ou forces électrostatiques) de différentes revêtements décrits dans la figure 1 ont été mesurées au moyen du même instrument (microscope à force atomique). On fait osciller la pointe au-dessus de la surface du matériau et on enregistre les variations de l'amplitude d'oscillation du levier en fonction de la distance pointe-surface. L'augmentation ou la diminution de l'amplitude juste avant le contact nous donne un renseignement concernant le champ de force en présence.

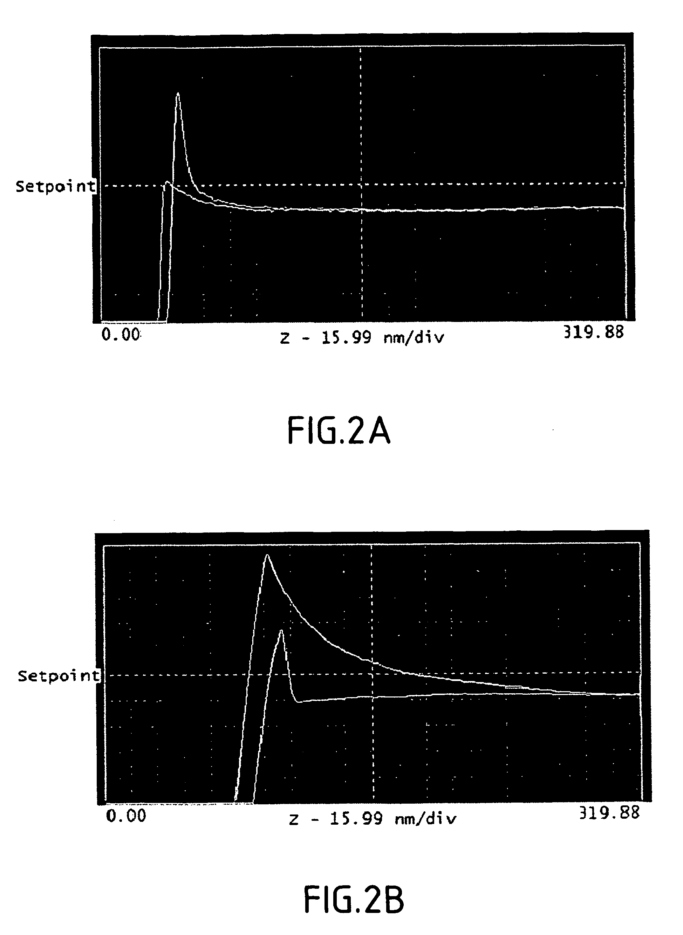

Les résultats obtenus (présentés dans la fig. 2) montrent que les charges de surface sont importantes pour les revêtements dont les performances anti-graffiti sont moyennes, voire nulles (fig. 2b, courbe de force pour le revêtement correspondant à la formulation n° 15 du tableau 1) Dans ce cas, l'amplitude d'oscillation est augmentée de 5-6 nm. Les revêtements dont les propriétés anti-graffiti sont très bonnes présentent des charges de surface faibles (fig. 2a, courbe de force pour le revêtement correspondant à la formulation n° 2 du tableau 1). Dans ce cas, une variation de l'ordre du nanomètre a été observée.

Le procédé de traitement anti-graffiti d'une surface lisse d'un support solide non poreux, notamment métallique, comprend les étapes suivantes :
- application d'une formulation comprenant: au moins une résine de type oligomère, un monomère et/ou un solvant, au moins un photoinitiateur, éventuellement un agent anti-UV et éventuellement de l'isocyanate, sur ledit support solide ;
- exposition dudit support à un rayonnement UV ;
- application d'une couche de graffiti sur la pellicule de vernis ainsi formée ;
- élimination de la couche de graffiti à l'aide d'un produit nettoyant à base de solvant.

Une fois que la pellicule de vernis est formée sur une surface solide, notamment métallique, comme décrit plus haut, celle-ci est apte à recevoir une couche de graffiti appliquée par-dessus, à l'aide de bombes, feutres...

Grâce à la densité élevée du réseau de réticulation, ainsi qu'à la force d'adhésion faible de ladite pellicule, les pigments présents dans les graffiti ne pénètrent pas ou fort peu dans ledit réseau. Ceci rend possible l'élimination complète et facile de ladite couche de graffiti à l'aide d'un produit nettoyant usuel, y compris lorsque le nettoyage intervient après plusieurs semaines.

Les produits nettoyants utilisés dans le cadre du procédé de l'invention sont des produits couramment utilisés pour l'élimination des graffitis sur supports solides non-poreux, comme, par exemple :
- le nettoyant « Magnus 1302 » commercialisé par la société Henkel (Surface Technologies), qui se présente sous la forme d'un liquide miscible à l'eau, sans étiquette de danger ;
- le nettoyant « Socostrip T4210 » commercialisé par la société Socomor, qui se présente sous la forme d'un liquide miscible à l'eau, avec une étiquette Xi (danger irritant) ;
- le dégraissant 220 commercialisé par la société Soficor-Mäder, qui est un nettoyant neutre à base d'un mélange d'éthers de glycols de la série P, sans étiquette de danger.

Le vernis de l'invention est appliqué en couches dont l'épaisseur est de l'ordre de 5 à 25 µm.

Les exemples de réalisation suivants, non limitatifs, illustrent plus en détail les propriétés du revêtement anti-graffiti.

### Exemple 1. Revêtement anti-graffiti avec une bonne tenue à l'extérieur

Plusieurs compositions de vernis comprenant un agent anti-UV, illustrées dans le tableau 2, ont été testées à l'aide d'un accélérateur de vieillissement QUV. Ces vernis ont été exposés alternativement :
i) aux rayonnements UV de longueur d'onde comprise entre 270 et 370 nm et de puissance 2 ± 0,4 mW/cm², pendant 4h à 60°C ;
ii) à une humidité relative à saturation, pendant 4h à 60°C.
Après plusieurs cycles de 8h (i + ii), qui correspondent à la norme NFT30-036), on mesure le brillant avec un angle de 60° (delta Br correspond à la chute du brillant du film) et l'écart de teinte (deltaE correspond à l'écart colorimétrique global mesuré dans le système CIELAB 1976). Les résultats, présentés dans le tableau 3, montrent que le meilleur compromis tenue anti-graffiti - UV est obtenu pour le vernis 310.7110.011C, qui comprend la formule 91266 (référence 3, tableau 1) détaillée ci-dessous. L'adhérence est mesurée selon la norme ISO 2409 (GT compris entre 0 et 5).

| Formule | Composition | % poids |
|---|---|---|
| 91266 | - uréthane acrylate hexafonctionnel | 66,0 |
| | (Ebecryl 1290 - UCB) | |
| | - hexanediol diacrylate | 28,0 |
| | (Laromer HDDA - BASF) | |
| | - méthylbenzoylformate | 3,0 |
| | (Genocure MBF - RAHN) | |
| | - additif siliconé | 0,5 |
| | (Baysilone^{®} OL 17 - BORCHERS) | |
| | - agent anti-UV (Tinuvin 1130 - CIBA) | 1,5 |
| | - stabilisateur UV (Tinuvin 292 - CIBA) | 1,0 |
| | | 100,0 |

### Exemple 2. Compositions de revêtement anti-graffiti pour réticulation mixte

Deux compositions utilisées pour couvrir des objets solides présentant des surfaces courbes sont détaillées ci-après. Ces compositions sont additionnées avant application de 2,5% de Desmodur N3390 (polyisocyanate aliphatique à 90% dans un mélange acétate de butyle/solvant naphta).

| Formule | Composition | % poids |
|---|---|---|
| Formule 91234 | - uréthane acrylate hydroxylé tétrafonctionnel | 58,7 |
| | - triméthylolpropane triacrylate | 17,6 |
| | - hexanediol diacrylate | 8,1 |
| | - photoinitiateur (1-hydroxycétone) | 3,9 |
| | - benzophénone | 2,1 |
| | - additif siliconé (BYK^{®}-346) | 0,5 |
| | - oligoamine | 9,1 |
| | | 100,0 |

| Formule | Composition | % poids |
|---|---|---|
| 90249 | - uréthane acrylate trifonctionnel | 44,6 |
| | - uréthane acrylate difonctionnel | 14,8 |
| | - hexanediol diacrylate | 14,8 |
| | - tétrahydro-2-furaneméthanol | 11,1 |
| | - photoinitiateur (1-hydroxycétone) | 1,9 |
| | - méthylbenzoylformate | 2,8 |
| | - diacétone alcool | 8,4 |
| | - additif siliconé | 0,7 |
| | (BYK^{®}-306 à 10% dans acetate de butyle) | |
| | - CAB 551-0,01 (EASTMAN) à 10% dans HDDA | 0,9 |
| | | 100,0 |

Le revêtement anti-graffiti présente de nombreux avantages :
- il est transparent et brillant ;
- il est non-polluant pour l'environnement ; en effet, la réticulation sous rayonnement UV évite les émissions de composés organiques volatiles (COV) ;
- il permet de réaliser des économies d'énergie ;
- le temps nécessaire pour obtenir le revêtement sous rayonnement UV est très court (quelques secondes au maximum).

## Revendications

1. Revêtement anti-graffiti destiné à recouvrir un support solide non-poreux à surface lisse, ledit revêtement étant obtenu par réticulation, notamment par réticulation sous rayonnement UV, d'une composition comprenant :
- au moins une résine sélectionnée parmi les uréthane acrylates et les uréthane acrylates hydroxylés ;
- au moins un monomère qui joue également le rôle de solvant ;
- au moins un photoinitiateur,
- éventuellement un agent anti-UV,
la sélection des composants de la composition et les conditions de réticulation étant tels que ledit revêtement présente un réseau de réticulation compact et acquiert une classification « G1 » ou « G0 » selon la norme NF F 31-112.

2. Revêtement selon la revendication 1 **caractérisé en ce que** les pourcentages en poids desdits composants de ladite composition sont : résine - de 35 à 80% ; monomère - de 20 à 60% ; photoinitiateur - de 0,5 à 7% .

3. Revêtement selon l'une quelconque des revendications 1 et 2 **caractérisé en ce qu'**il présente une force d'adhésion inférieure à 200 nN.

4. Revêtement selon l'une quelconque des revendications 1 à 3 **caractérisé en ce que** ladite composition comprend également de l'isocyanate.

5. Revêtement selon l'une quelconque des revendications 1 à 4 **caractérisé en ce qu'**il présente une épaisseur comprise entre 5 et 25 µm.

6. Composition de revêtement selon l'une quelconque des revendications 1 à 3 et 5 adaptée à une utilisation dudit revêtement à l'extérieur **caractérisé en ce qu'**elle comprend :
a) de 60% à 70% en poids d'un uréthane acrylate hexafonctionnel;
b) de 25% à 30% en poids d'un hexanediol diacrylate;
c) de 2 à 5% en poids d'un photoinitiateur;
d) de 1% à 5% en poids d'agent anti-UV ;
e) de 0,5% à 2% en poids de stabilisateur UV;
f) de 0,1 à 1% d'additif.

7. Procédé de traitement anti-graffiti d'une surface lisse d'un objet solide non-poreux, **caractérisé en ce qu'**il comprend les étapes suivantes :
i) application d'une composition de revêtement selon les revendications 1 à 6 sur un support solide ;
ii) exposition dudit support à un rayonnement UV ;
iii) application d'une couche de graffiti sur la pellicule de vernis ainsi formée ;
iv) élimination de la couche de graffiti à l'aide d'un produit nettoyant à base de solvant.

8. Utilisation de la composition selon la revendication 4 pour le traitement anti-graffiti selon la revendication 7 d'un objet solide présentant des surfaces courbes.

## Claims

1. Anti-graffiti coating intended to coat a non-porous, solid support with smooth surface, said coating being obtained by the cross-linking, in particular by cross-linking under UV radiation, of a composition containing:
- at least one resin chosen from among urethane acrylates and hydroxylated urethane acrylates;
- at least one monomer which also acts as solvent;
- at least one photoinitiator,
- optionally an anti-UV agent,
the choice of components of the composition and the conditions for cross-linking being such that said coating has a compact cross-link network and achieves "G1" or G0" classification according to standard NF F 31-112.

2. Coating according to claim 1, **characterized in that** the weight percentages of said components of said composition are: resin - 35 to 80%; monomer - 20 to 60%; photoinitiator - 0.5 to 7%.

3. Coating according to either of claims 1 and 2, **characterized in that** it has an adhesion force of less than 200 nN.

4. Coating according to any of claims 1 to 3,
**characterized in that** said composition also contains isocyanate.

5. Coating according to any of claims 1 to 4, **characterized in that** its thickness is between 5 and 25 µm.

6. Coating composition according to any of claims 1 to 3 and 5, adapted for the outdoor use of said coating, **characterized in that** it contains:
a) 60 to 70 wt.% of a hexafunctional urethane acrylate;
b) 25 to 30 wt.% of a hexanediol diacrylate;
c) 2 to 5 wt.% of a photoinitiator;
d) 1 to 5 wt.% of an anti-UV agent;
e) 0.5 to 2 wt.% of a UV stabilizer;
f) 0.1 to 1% of additive.

7. Anti-graffiti treatment method for a smooth surface of a non-porous solid object, **characterized in that** it comprises the following steps:
i) applying a coating composition, according to claims 1 to 6, to a solid support;
ii) exposing said support to UV radiation;
iii) applying a layer of graffiti to the varnish film thus formed;
iv) removing the graffiti layer using a solvent-based cleaning product.

8. Use of the composition according to claim 4 for the anti-graffiti treatment according to claim 7 of a solid object having curved surfaces.

## Patentansprüche

1. Antigraffitibelag, der dazu vorgesehen ist, einen festen nicht-porösen Träger mit glatter Oberfläche zu bedecken, wobei der Belag erhalten wird durch Vernetzen, insbesondere durch Vernetzen unter UV-Einstrahlung, einer Zusammensetzung, welche umfaßt:
- wenigstens ein Harz, gewählt unter den Urethanacrylaten und den hydroxylierten Urethanacrylaten,
- wenigstens ein Monomer, das auch die Rolle eines Lösungsmittels spielt,
- wenigstens einen Photostarter,
- gegebenenfalls ein UV-Schutzreagenz,
wobei die Auswahl der Bestandteile der Zusammensetzung und die Vernetzungsbedingungen derart sind, daß die Beschichtung ein kompaktes Vernetzungsnetzwerk ausweist und eine Klassifikation "G1" oder "G0" gemäß der Norm NF F 31-112 annimmt.

2. Belag nach Anspruch 1, **dadurch gekennzeichnet, daß** die Gewichtsprozentanteile der Bestandteile der Zusammensetzung sind: Harz von 35 % bis 80 %, Monomer von 20 % bis 60 %, Photostarter von 0,5 % bis 7 %.

3. Belag nach einem der Ansprüche 1 und 2, **dadurch gekennzeichnet, daß** er eine Adhäsionskraft unter 200 nN aufweist.

4. Belag nach einem der Ansprüche 1 bis 3, **dadurch gekennzeichnet, daß** die Zusammensetzung auch Isocyanat umfaßt.

5. Belag nach einem der Ansprüche 1 bis 4, **dadurch gekennzeichnet, daß** er eine Dicke zwischen 5 und 25 µm aufweist.

6. Zusammensetzung eines Belages nach einem der Ansprüche 1 bis 3 und 5, ausgelegt für eine äußere Verwendung des Belags, **dadurch gekennzeichnet, daß** sie umfaßt:
a) 60 Gew.-% bis 70 Gew.-% eines hexafunktionellen Urethanacrylats,
b) 25 Gew.-% bis 30 Gew.-% eines Hexandioldiacrylats,
c) 2 Gew.-% bis 5 Gew.-% eines Photostarters,
d) 1 Gew.-% bis 5 Gew.-% eines UV-Schutzreagenzes,
e) 0,5 Gew.-% bis 2 Gew.-% UV-Stabilisator,
f) 0,1 bis 1 % eines Zusatzes.

7. Verfahren zur Antigraffitibehandlung einer glatten Oberfläche eines festen nicht porösen Gegenstandes, **dadurch gekennzeichnet, daß** es die folgenden Schritte umfaßt:
i) Auftragen einer Belagzusammensetzung nach den Ansprüchen 1 bis 6 auf einen festen Träger,
ii) Aussetzen des Trägers einer UV-Bestrahlung,
iii) Auftragen einer Graffitischicht auf den so ausgebildeten Lackfilm,
iv) Entfernung der Graffitischicht mit Hilfe eines Reinigungsproduktes auf Lösungsmittelbasis.

8. Verwendung der Zusammensetzung nach Anspruch 4 zur AntiGraffitibehandlung nach Anspruch 7 eines festen Gegenstandes, der gekrümmte Oberflächen aufweist.
